# EUROPÄISCHE PATENTSCHRIFT

(11) **EP 0 898 189 B1**
(45) Veröffentlichungstag und Bekanntmachung des Hinweises auf die Patenterteilung: **14.09.2005**
(21) Anmeldenummer: 98112971.1
(22) Anmeldetag: 13.07.1998
(51) Int. Cl.: G02B 7/02

(54) **Galvanoplastische Optik-Fassung**
Galvanoplastic optical mount
Douille galvanoplastique pour composant optique

(30) Priorität: 18.08.1997 DE 19735831
(43) Veröffentlichungstag der Anmeldung: 24.02.1999
(73) Patentinhaber: Carl Zeiss SMT AG, 73446 Oberkochen (DE)
(72) Erfinder: Holderer, Hubert, 89551 Königsbronn (DE); Bingel, Ulrich, 73457 Lauterburg (DE); Zernike, Frits, Essex, CT 06426 (US)
(74) Vertreter: Müller-Rissmann, Werner Albrecht

(56) Entgegenhaltungen:
- DD-A- 204 320
- DE-A- 2 526 318
- GB-A- 846 289
- US-A- 5 058 993
- US-A- 5 162 951
- US-A- 5 570 238
- SOVIET PATENTS ABSTRACTS Section PQ, Week 8723 Derwent Publications Ltd., London, GB; Class P81, AN 87-162236 XP002086448 & SU 1 265 679 A (GUSEV O I) , 23. Oktober 1986

## Beschreibung

Besonders hohe Anforderungen werden an Optik-Fassungen für satellitengestützte Systeme gestellt. Geringes Gewicht, hohe mechanische und thermische Belastung bei präziser spannungsfreier Lagerung der Optik-Bauteile sind hier gefordert. Beispiele für bekannte Lösungen in diesem Einsatzbereich gibt DE 296 03 024.4 U einschließlich des darin angeführten Standes der Technik.

Ein anderes Gebiet mit besonders hohen Anforderungen ist die Mikrolithographie. Die Projektionsbelichtungssysteme benötigen engste Toleranzen einschließlich geringster Verspannungen auch bei thermischen Einflüssen, um die extreme Abbildungsgüte zu erreichen, die gefordert ist.

In beiden Anwendungsgebieten werden herkömmlich metallische Fassungen verwendet, die durch spanabhebende Bearbeitung - in aller Allgemeinheit, inklusive Erosion, Wasserstrahlschneiden, Schleifen, Laserablation usw. - hergestellt werden. Federgelenke und Balken werden dabei in vielen Varianten als Entkoppelelemente eingesetzt.

Die Galvanoplastik ist eine bekannte Technik zur Herstellung dünnwandiger Präzisionsteile, z.B. auch von Spiegeloptiken. Auf einem mit einer dünnen Schicht leitend gemachten Formkern wird elektrolytisch Metall, meist Aluminium oder Nickel bzw. Legierungen davon, abgeschieden. Nach Erreichen der gewünschten Dicke wird das Galvanoplastik-Teil von Formkern unter Nutzung der unterschiedlichen Wärmeausdehnung abgelöst.

Aus DD 204 320 A ist es bekannt, eine Linse galvanisch mit einem formschlüssigen Ring zu versehen, der zum Zentrieren der Linse überdreht wird, und mit dessen Flächen die Linse dann in einer Fassung aufgenommen wird. Der geschlossene Ring führt zwangsläufig bei thermischer Belastung zu Spannungen in der Linse wegen der unterschiedlichen Wärmeausdehnung.

Aufgabe der Erfindung ist die Bereitstellung einer hochpräzisen Fassung, die optimale Spannungsentkopplung des gefaßten Optik-Bauteils ermöglicht, und ein günstiges Herstellverfahren dafür.

Gelöst wird diese Aufgabe mit einer Optik-Fassung nach Anspruch 1 und mit einem Verfahren nach Anspruch 5.

Durch den Einsatz der Galvanoplastik wird es möglich, eine sehr feingliedrige Fassung mit größter reproduzierbarer Genauigkeit in wenigen Bearbeitungsschritten herzustellen.

Dabei wird die galvanische Abscheidung gleichzeitig als Fügetechnik verwendet, zur kleberfreien Verbindung mit dem gefaßten Optik-Teil, und zur Integration eines Massivteils mit einem Querschnitt, der galvanoplastisch nur unwirtschaftlich herstellbar wäre.

Für das Verfahren nach Anspruch 5 geben die Unteransprüche 6 bis 10 vorteilhafte Ausführungsformen an.

Näher erläutert wird die Erfindung anhand der Zeichnung.
- Figur 1: zeigt eine schematische Übersicht einer galvanoplastischen Linsenfassung;
- Figur 2: zeigt einen schematisierten Querschnitt einer Fassung auf einem Formkern in einer Galvanik-Anlage;
- Figur 3: zeigt ausschnittsweise im Querschnitt die Verbindungsstelle von Fassung und Linse.

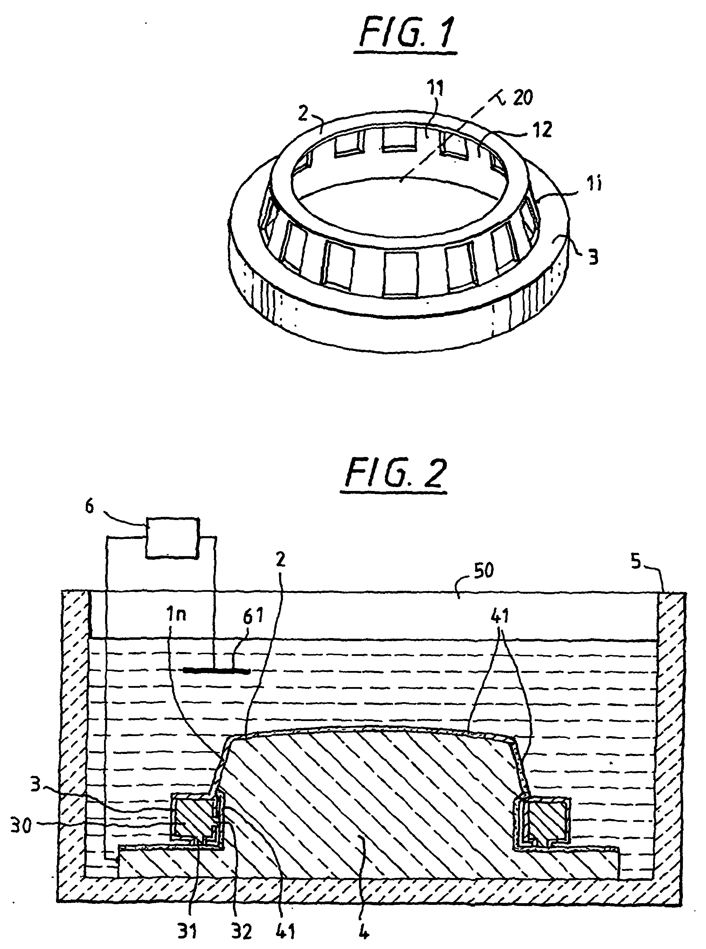

Figur 1 zeigt eine galvanoplastische Linsenfassung im Zustand nach dem Ablösen vom Formkern (Mandrel).

Der Außenring 3 ist durch einen umhüllten Kern 30 massiv und steif und ist vorzugsweise - hier nicht dargestellt - bereits mit Hilfsmitteln zur Befestigung im gesamten Optik-Gehäuse versehen, wie z.B. mit Bohrungen oder Nuten. Die Stege 11, 12, 1i bilden dünne Federgelenkbalken, welche den Innenring 2 zentriert zum Außenring 3 in seiner Position halten, aber Deformationen des Außenrings - z.B. durch Verschrauben mit anderen Teilen - fernhalten, ebenso Deformationen des Innenrings 2 - z.B. verursacht vom gefaßten optischen Bauteil oder der Verbindung dazu - spannungsfrei zulassen.

Ebenfalls erlauben die Stege 11, 12, 1i relative Durchmesseränderungen von Innenring 2 und Außenring 3, wie sie durch die Wärmedehnung bei Temperaturänderungen auftreten. Dazu wird der Innenring 2 vorzugsweise nach dem Ablösen vom Formkern 4 zwischen den Stegen 11, 12, 1i durchtrennt - vorzugsweise in einem rückwirkungsfreien Verfahren wie dem Laserschneiden.

Galvanoplastisch erzeugt wird der Innenring 2 vorzugsweise als geschlossener Ring, da dies das Abtrennen vom Formkern 4 durch thermisches Schrumpfen wesentlich unterstützt. Der geteilte Innenring 2 wird dann mit jedem Segment 2n einzeln mit dem Optik-Bauteil (Linse 7) verbunden und kann so spannungsfrei dessen thermische Ausdehnung übernehmen. Die Segmente 2n können auch einfache Fortsätze der Federgelenkbalken 1n sein.

Die Wärmeausdehnung des Außenrings 3 wird vom integrierten massiven Ring (30 in Fig. 2) bestimmt. Die Wärmeausdehnung der Stege 11, 12, 1i (Federgelenkbalken) wird durch das galvanisch abgeschiedene Material bestimmt. Durch geeignete Geometrie (Länge der Stege und Neigungswinkel zu den Ebenen der Ringe 2, 3) kann dann in der aus US 5,162,951 (zitiert in o.g. DE 296 03 024.4 U) bekannten Weise sichergestellt werden, daß sich der Abstand von Innen- und Außenring nicht ändert, oder aber in einer gewünschten Weise. In Figur 2 ist in der Galvanik-Anlage im Schnitt die Fassung (1, 2, 3) auf dem Formkern 4 zu sehen.

Der Formkern 4 kann aus Glas bestehen, das mit einer elektrisch leitenden dünnen Schicht in der Form der Fassung in Dünnschichttechnik belegt ist, z.B. durch Aufdampfen, Spalten, PVD, CVD - entweder strukturiert durch eine Maske oder durch wegätzen oder dergleichen nach Abdecken der stehenbleibenden Flächen mit einer Maske, die z.B. photolithographisch hergestellt ist.

Hier gezeigt ist ein Formkern 4 aus Metall - präzisionsgedreht und geschliffen und poliert -, der mit einer Isolierschicht 41 an den Durchbrüchen der Fassung (1, 2, 3), also zwischen den Stegen 11, 12, 1i, 1n, versehen ist - in entsprechender Weise wie oben für den Glas-Formkern beschrieben.

Man sieht in der Figur 2 gut, wie der massive Kern 30 des Außenrings 3 mit der galvanisch abgeschiedenen Schicht umhüllt und mit den Stegen 1n - links ist einer zu sehen, rechts ist eine Lücke zwischen zwei Stegen - verbunden wird. Paßstücke 31, 32 - am Kern 30 oder am Formkern 4 - sichern den Kern 30 in seiner Soll-Lage bei der elektrolytischen Abscheidung.

Durch die galvanische Umhüllung wird der massive Kern 30 aber nicht nur in die Fassung mechanisch integriert, er wird auch passiviert.

Nur schematisch angedeutet ist in Figur 2 die Galvanik-Anlage mit einer Wanne 5, einem Galvanik-Bad 50, einer Stromquelle 6 mit Verbindung zum Kern 30 und den leitenden Teilen des Formkerns 4, sowie einer Gegenelektrode 61.

Eine Nickel-Schicht von 120 µm Dicke wird so bei z.B. 1 A/dm² in 10 Stunden abgeschieden.

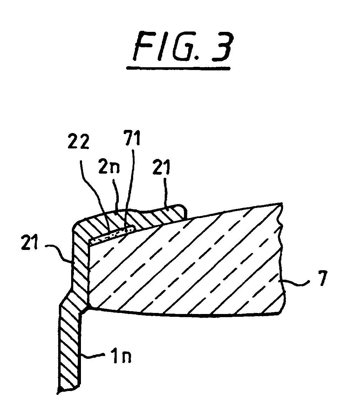

In Figur 3 ist im Schnitt ein Federgelenkbalken 1n mit zugehörigem Segment 21 des Innenrings 2 zu sehen, mit einer darin eingesetzten Linse 7. Die Fassung weist in diesem Bereich vom Formkern (Mandrel) 4 abgeformte Paßflächen 21 auf, die genau auf die Linse 7 abgestimmt sind. Ein Hohlraum 22 nimmt den Kleber 71 auf, der Linse 7 und Fassung zusammenhält.

Außer Linsen 7 können natürlich auch andere optische Teile wie Prismen, polarisationsoptische Teile, diffraktive Elemente oder Spiegel, auch in nicht rotationssymmetrischer Form so gefaßt werden.

Will man Kleber vermeiden, dann kann die Fassung direkt galvanisch mit dem optischen Element verbunden werden. Der Formkern für den Bereich der Federgelenkbalken und des Außenrings kann dann aber nicht mehr durch thermisches Schrumpfen abgelöst werden. Hier muß die Haftung der leitfähigen Schicht auf dem Formkern durch ein Trennmittel reduziert werden. Zum Beispiel kann auf einen Metall-Formkern eine dünne Graphit-Schicht aufgebracht werden.

Die Fassungen können auch mit mehreren Federgelenkbalken-Systemen aufgebaut sein, z.B. ein System nach Figur 1 mit nachgeordnetem Hexapod-System und weiterem Außenring. Auch können mehrere, ganz oder teilweise galvanoplastisch geformte Teile zu einer Fassung gefügt werden.

In einem Ausführungsbeispiel der Figur 1 hat der Kern 30 des Außenrings die Abmessungen außen * innen * Dicke von 200 mm * 160 mm * 20 mm, die Stege sind 200 µm dick, 10 mm breit und 15 mm lang, ihr Winkel zur Außenringebene beträgt ca 10°. Eine Linse aus Quarzglas mit Außendurchmesser 155 mm ist gefaßt, Werkstoff der Galvanoplastik ist Nickel, des Kerns ist Stahl. Die Lage des Linsenschwerpunkts verschiebt sich dann gegenüber der Lage der Auflagefläche des Außenrings 3 bei einer Temperaturänderung von + 20° C nach + 22° C um weniger als 1 µm.

## Patentansprüche

1. Optik-Fassung für ein Optik-Bauteil (7) mit einem am Optik-Bauteil (7) anliegenden Innenteil (2) und einem Außenrahmen (3), die durch eine Mehrzahl von Federgelenkbalken (11, 12, 1i) verbunden sind, **dadurch gekennzeichnet, dass** die Federgelenkbalken (11, 12, 1i) und das Innenteil (2) galvanoplastisch hergestellt sind und der Außenrahmen (3) ein galvanoplastisch beschichtetes Massivteil umfasst.

2. Optik-Fassung nach Anspruch 1, **dadurch gekennzeichnet, dass** das Innenteil (2) vorzugsweise mehrteilig ausgeführt ist.

3. Baugruppe bestehend aus einer Optik-Fassung nach Anspruch 1 oder 2 und einem Optik-Bauteil (7), **dadurch gekennzeichnet, dass** das Optik-Bauteil (7) eine rotationssymmetrische Linse ist, die außerhalb ihres optisch nutzbaren Bereichs mit dem Innenteil (2) an mindestens einer abgestimmten Paßfläche (21) verbunden ist.

4. Baugruppe bestehend aus einer Optik-Fassung nach Anspruch 1 oder 2 und einem Optik-Bauteil (7), **dadurch gekennzeichnet, dass** das Optik-Bauteil (7) eine dünne elektrisch leitende Schicht trägt, die in Dünnschicht-Technik aufgebracht ist, und dass das Innenteil (2) darauf galvanoplastisch aufgebracht ist.

5. Herstellverfahren einer Optik-Fassung mit einer Mehrzahl von Federgelenkbalken (11,12 1i), welche einen an einem Optik-Teil (7) anliegenden Innenteil (2) mit einem Außenrahmen (3) verbinden, **dadurch gekennzeichnet, dass** galvanoplastische Abscheidung zur Herstellung der Federgelenkbalken (11,12 1i), des Innenteils (2) und des Außenrahmens verwendet wird, wobei ein Formkern (4), der eine strukturiert elektrisch leitfähige Oberfläche aufweist, sowie ein Massivteil (30) als Basis der Galvanoplastik verwendet werden, die Galvanoplastik das Massivteil (30) nach Beendigung der Formgebung umhüllt und der Formkern (4) nach Beendigung der Formgebung abgelöst wird.

6. Verfahren nach Anspruch 5, **dadurch gekennzeichnet, dass** ein optisches Bauteil (7) in Dünnschichttechnik mit einer elektrisch leitenden Schicht versehen wird und die Fassung (1i, 2, 3) direkt darauf galvanoplastisch abgeschieden wird.

7. Verfahren nach mindestens einem der Ansprüche 5 oder 6, **dadurch gekennzeichnet, dass** die Fassung nach der galvanoplastischen Abscheidung nachbearbeitet wird.

8. Verfahren nach Anspruch 7, **dadurch gekennzeichnet, dass** die Nachbearbeitung durch Trennen, vorzugsweise durch Laserstrahlschneiden oder Wasserstrahlschneiden, erfolgt.

9. Verfahren nach Anspruch 8, **dadurch gekennzeichnet, dass** ein Innenteil (2) in Segmente (2n) aufgetrennt wird.

10. Verfahren nach Anspruch 7, **dadurch gekennzeichnet, dass** mindestens eine Fläche spanabhebend, insbesondere durch Schleifen, Polieren, Drehen, Fräsen oder Erodieren, nachbearbeitet wird.

11. Herstellverfahren einer Optik-Baugruppe aus einem Optik-Bauteil (7) und einer Optik-Fassung, die nach einem Verfahren gemäß mindestens einem der Ansprüche 5 bis 10 hergestellt ist, **dadurch gekennzeichnet, dass** das Optik-Bauteil (7) und die Optik-Fassung an mehreren getrennten Bereichen verbunden werden.

12. Optik-Baugruppe mit einer Optik-Fassung und einem Optik-Bauteil (7) mit den Merkmalen von mindestens einem der Ansprüche 1 bis 4, **dadurch gekennzeichnet, dass** Optik-Fassung und Optik-Bauteil (7) an mehreren getrennten Bereichen miteinander verbunden sind.

## Claims

1. Optical mount for an optical component (7), having an inner part (2), bearing against the optical component (7), and an outer frame (3) which are connected by a plurality of resilient articulated bars (11, 12, 1i), **characterized in that** the resilient articulated bars (11, 12, 1i) and the inner part (2) are produced galvanoplastically, and the outer frame (3) comprises a galvanoplastically coated solid part.

2. Optical mount according to Claim 1, **characterized in that** the inner part (2) is preferably of multipartite design.

3. Module comprising an optical mount according to Claim 1 or 2 and an optical component (7), **characterized in that** the optical component (7) is a rotationally symmetrical lens which is connected outside its optically useful region to the inner part (2) at at least one matching fitting surface (21).

4. Module comprising an optical mount according to Claim 1 or 2 and an optical component (7), **characterized in that** the optical component (7) bears a thin electrically conductive layer which is applied using thin film technology, and **in that** the inner part (2) is applied thereon galvanoplastically.

5. Production method for an optical mount having a plurality of resilient articulated bars (11, 12, 1i) which connect an inner part (2) bearing against an optical part (7) to an outer frame (3), **characterized in that** galvanoplastic precipitation is used to produce the resilient articulated bars (11, 12, 1i), the inner part (2) and the outer frame, a mandrel (4) which has a structured electrically conductive surface, and a solid part (30) being used as basis for the galvanoforming, the galvanoformed part surrounding the solid part (30) after completion of the forming, and the mandrel (4) being removed after termination of the forming.

6. Method according to Claim 5, **characterized in that** an optical component (7) is provided with an electrically conductive layer using thin film technology, and the mount (1i, 2, 3) is precipitated directly thereon galvanoplastically.

7. Method according to at least one of Claims 5 and 6, **characterized in that** the mount is finished after the galvanoplastic precipitation.

8. Method according to Claim 7, **characterized in that** the finishing is performed by separation, preferably by laser beam cutting or water jet cutting.

9. Method according to Claim 8, **characterized in that** an inner part (2) is separated into segments (2n).

10. Method according to Claim 7, **characterized in that** at least one surface is finished by cutting, in particular by grinding, polishing, turning, milling or electroerosion.

11. Production method for an optical module composed of an optical component (7) and an optical mount which is produced using a method in accordance with at least one of Claims 5 to 10, **characterized in that** the optical component (7) and the optical mount are connected at a number of separate regions.

12. Optical module with an optical mount and an optical component (7), having the features of at least one of Claims 1 to 4, **characterized in that** the optical mount and optical component (7) are connected to one another at a number of separate regions.

## Revendications

1. Monture optique pour un composant optique (7) comprenant une partie intérieure (2) appliquée sur le composant optique (7) et un cadre extérieur (3) qui sont reliés par une pluralité de poutres articulées à ressort (11, 12, 1i), **caractérisée en ce que** les poutres articulées à ressort (11, 12, 1i) et la partie intérieure (2) sont fabriquées par galvanoplastie et le cadre extérieur (3) présente une partie massive à revêtement galvanoplastique.

2. Monture optique selon la revendication 1, **caractérisée en ce que** la partie intérieure (2) est de préférence réalisée en plusieurs parties.

3. Sous-ensemble composé d'une monture optique selon la revendication 1 ou 2 et d'un composant optique (7), **caractérisé en ce que** le composant optique (7) est une lentille à symétrie rotationnelle qui est reliée, en-dehors de sa zone optiquement utilisable, avec la partie intérieure (2) au' niveau d'au moins une surface d'ajustage (21) adaptée.

4. Sous-ensemble composé d'une monture optique selon la revendication 1 ou 2 et d'un composant optique (7), **caractérisé en ce que** le composant optique (7) porte une mince couche conductrice d'électricité qui est appliquée en technologie de couche mince et que la partie intérieure (2) est appliquée sur celle-ci par galvanoplastie.

5. Procédé de fabrication d'une monture optique comprenant une pluralité de poutres articulées à ressort (11, 12, 1i) qui relient une partie intérieure (2) appliquée sur une partie optique (7) avec un cadre extérieur (3), **caractérisé en ce que** la précipitation galvanoplastique est employée pour fabriquer les poutres articulées à ressort (11, 12, 1i), la partie intérieure (2) et le cadre extérieur, un noyau façonné (4) qui présente une surface conductrice d'électricité structurée ainsi qu'une partie massive (30) étant utilisées comme base pour la galvanoplastie, la galvanoplastie enrobant la partie massive (30) après avoir terminé la mise en forme et le noyau façonné (4) étant détaché après avoir terminé la mise en forme.

6. Procédé selon la revendication 5, **caractérisé en ce qu'**un composant optique (7) est muni d'une couche conductrice d'électricité par technologie de couche mince et la monture (1i, 2, 3) est appliquée directement sur celle-ci par précipitation galvanoplastique.

7. Procédé selon au moins l'une des revendications 5 ou 6, **caractérisé en ce que** la monture est réusinée après la précipitation galvanoplastique.

8. Procédé selon la revendication 7, **caractérisé en ce que** le réusinage consiste en une découpe, de préférence par découpe au laser ou découpe au jet d'eau.

9. Procédé selon la revendication 8, **caractérisé en ce que** la partie intérieure (2) est découpée en segments (2n).

10. Procédé selon la revendication 7, **caractérisé en ce qu'**au moins une surface est réusinée par enlèvement de copeaux, notamment par rectification, polissage, tournage, fraisage ou érosion.

11. Procédé de fabrication d'un sous-ensemble optique composé d'un composant optique (7) et d'une monture optique fabriquée d'après un procédé selon au moins l'une des revendications 5 à 10, **caractérisé en ce que** le composant optique (7) et la monture optique sont reliés en plusieurs zones séparées.

12. Sous-ensemble optique comprenant une monture optique et un composant optique (7) possédant les caractéristiques d'au moins l'une des revendications 1 à 4, **caractérisé en ce que** la monture optique et le composant optique (7) sont reliés ensemble en plusieurs zones séparées.
